# EUROPEAN PATENT APPLICATION

(11) **EP 1 967 954 A1**
(43) Date of publication of application: **10.09.2008**
(21) Application number: 06805120.0
(22) Date of filing: 31.10.2006
(51) Int. Cl.: G06F 12/14

(54) **A METHOD FOR DELETING VIRUS PROGRAM AND A METHOD TO GET BACK THE DATA DESTROYED BY THE VIRUS.**

(30) Priority: 16.11.2005 CN 200510114944; 15.02.2006 CN 200610007611
(71) Applicant: Bai, Jie, Beijing 100089 (CN); Li, Wei, Beijing 100089 (CN); Lu, Zhengyu, Beijing 100080 (CN)
(72) Inventor: Bai, Jie, Beijing 100089 (CN); Li, Wei, Beijing 100089 (CN); Lu, Zhengyu, Beijing 100080 (CN)
(74) Representative: Herrmann, Uwe
(86) International application number: PCT/CN2006/002919
(87) International publication number: WO 2007/056932

(57) **Abstract**

A method for deleting virus program and a method to get back the data destroyed by the virus: get an anti-operation which is in reversed to the destroyed steps of the virus program, execute the anti-operation to delete the virus or the get back the data destroyed by the virus.

## Description

The present application claims the benefits from Chinese patent application CN200510114944.2, entitled "method for recovering data damaged by virus program, apparatus and virus clearing method", filed with the Chinese Patent Office on November 16, 2005, and Chinese patent application CN200610007611.4, entitled "method for recovering data damaged by virus program, apparatus and virus clearing method", filed with the Chinese Patent Office on February 15, 2006, which are incorporated by reference into the present application in their entireties herein.

### Field of the Invention

The present invention relates to a method of and an apparatus for recovering data corrupted by virus programs and a method of removing virus programs.

### Background of the Invention

In the existing methods of removing deleterious computer programs, the removing is performed by removing the programs uniformly. Specific steps in cases where the methods are applicable will be described as bellow:

First, if there is a file in a computer system, which is an executable entity for a virus program, i.e., the file is a pure virus program, the file is directly deleted when it is determined as a virus program.

Second, if a virus program attaches itself to a hosting program, for example, to the end of the hosting program (thus the hosting program increases in its size), and modifies the entry point of the hosting program in order to activate the virus program, it is necessary for an anti-virus killer to locate the inserting point at which the virus program is attached to the end or other position of the hosting program, so as to separate the virus program from the hosting program and delete the virus program; otherwise, the entire hosting program has to be deleted.

Third, if a virus program is able to keep unchanged the size and the entry point in the file header of its hosting program by using a special infecting skill, the existing anti-virus programs are only able to delete the hosting program, not being able to perform a further analysis and recover the hosting program. For example, exe files and dll files for Windows are in PE (Portable Executable) formats. A PE file is formed of a plurality of segments. There is a blank between two adjacent segments if they are in cluster alignment. A virus program, if small enough, may divide itself into portions and insert each of the portions into the blank following a respective segment. Therefore, it is not necessary to add an additional segment, thus keeping the size of the file unchanged. A shelled virus program has appeared recently, where the hosting program is packed, but its filename and other attributes are not changed. When the hosting program is to be run by the system, the virus program releases the hosting program to start running. For the above kinds of virus programs, the existing anti-virus program is only capable of deleting a hosting program if the hosting program is determined as being infected. It is impossible to perform a further analysis and recover the hosting program.

A compressed file may be infected by a computer virus program to be removed. For example, a Win32.crypto virus program may infect various compressed files such as ZIP, ARJ, RAR, ACE and CAB. The codes of these virus programs contain code segments for decompressing and compressing compressed files of specific file types such as ZIP and ARJ. The code segments generally decompress the compressed contents in the compressed files, infect appropriate ones in the decompressed files, and compress the infected files back into the compressed file. At the same time, the check sum in the header of the compressed file is modified to be identical to the original check sum, or other means may be used to eliminate the trace showing that the compressed file, including the files infected by the virus program, has been modified or infected. For such virus programs, the existing methods of removing the virus programs either delete the infected file in a compressed file, or find out nothing because the check sum in the header of the compressed file has no change.

It can be seen that the existing method of removing computer virus programs cannot recover badly corrupted hosting programs or data when removing the virus programs, making the computer, after removing the virus programs, impossible to recover to the state before the infection as far as possible.

### Summary of the Invention

In view of the above problem, a technical problem to be solved by the present invention is to provide a method of recovering data corrupted by a virus program, an apparatus for the same and a method of removing the virus program. The method can locate the virus program reliably, and recover infected and corrupted data in the computer system by the greatest degree while removing the virus program.

To solve the above technical problem, the method of recovering data corrupted by a virus program provided by the present invention includes:
obtaining a devastating behavior operation step that can be performed by the virus program;
establishing a reverse behavior operation step corresponding to the devastating behavior operation step;
performing the corresponding reverse behavior operation step in response to the devastating behavior operation step that can be performed by the virus program.

The method may further include: making a backup of information relating to a computer operating system, performing the reverse behavior operation step by using the backup data.

The backup may be incremental.

Further, the devastating behavior that can be performed by the virus program may be determined by the following steps of:
obtaining the devastating operation behavior of a known virus program;
writing a corresponding control program according to the devastating operation behavior;
making the control program acquire control of the devastating operation behavior;
invoking the corresponding control program by the virus program so that the control program records the devastating operation behavior by the virus program.

The method may further include: returning a successful response message from the control program to the program to be checked.

Further, a system function call routine for embedding the control program in the operating system or corresponding to the devastating operation behavior may transfer control to a corresponding control program, so that the control program can acquire control of the devastating operation behavior.

Further, the reverse behavior operation step is performed in the order of the devastating behavior operation step that can be performed by the virus program.

Further, the corresponding reverse behavior operation step established in response to the devastating behavior operation step may be stored in a database table.

The present invention provides an apparatus for recovering data corrupted by a virus program, including:
an input unit for obtaining a devastating behavior operation step that can be performed by the virus program;
a creating unit for establishing a reverse behavior operation step corresponding to the devastating behavior operation step;
an executing unit for executing the reverse behavior operation step.

The apparatus may further include: a data backup unit for making a backup of information relating to a computer operating system, wherein the executing unit performs the reverse behavior operation step by using the backup information.

The apparatus may further include: a virtual environmental unit for embedding the control program obtained in response to the devastating operation behavior into the operating system, so that the control program acquires control of the devastating operation behavior; wherein upon invoking the corresponding control program by the virus program, the control program records the operation by the virus program.

The present invention also provides a method of removing a virus program, including:
obtaining a devastating behavior operation step that can be performed by the virus program;
establishing a reverse behavior operation step corresponding to the devastating behavior operation step and a virus program deleting step;
executing the reverse behavior operation step and the virus program deleting step.

As compared to the prior art, the present invention has at least the following advantages:

The present invention establishes a reverse behavior operation step corresponding to the devastating operation of each of different virus programs, so that a corresponding reverse processing step may be performed for each of devastating operations of the different virus programs. If the devastating operation corrupts the data, the reverse behavior operation step may recover the data corrupted by the virus, so that the computer with the virus program being removed may be recovered as far as possible to its original state before infected by the virus program.

In the method of recovering data corrupted by a virus program according to the present invention, the operation step executable by the virus program may be automatically obtained by the computer. The obtaining process may be performed through the following steps: obtaining and parsing the devastating operation behavior of a known virus program; writing a corresponding control program according to the devastating operation behavior; embedding the control program into an operating system; invoking the control program by the program to be checked, wherein the control program records operations of the program to be checked, so as to check and record operations of the program. This approach is simple and easy for implementation. The specific work flow of the virus program may be analyzed and tracked to record the operation of the virus program, without tool programs for analysis such as DEBUG and PROVIEW and dedicated experimental computers.

The present invention also provides an apparatus for recovering data corrupted by a virus program. The apparatus may perform a reverse behavior operation step corresponding to the devastating operation of each of different virus programs, and by making a backup of system files, recover the data corrupted by the virus. The apparatus eliminates the defect that existing methods of removing a virus perform a processing step of deleting the entire infected program for any virus, enabling the computer removed of the virus program to recover as far as possible to its original state before infected by the virus program.

### Brief Description of the Drawings

The present invention will be further described in connection with accompanying drawings and specific embodiments in the following.

Figure 1 is a flow chart showing a method of recovering data corrupted by a virus program, according to an embodiment of the present invention;

Figure 2 is a schematic diagram showing source code sequence blocks of a virus for performing specific functions or achieving specific results;

Figure 3 is a schematic diagram showing operation steps corresponding to the source code sequence blocks of virus program as shown in figure 2;

Figure 4 is a schematic diagram showing the structure of an apparatus for recovering data corrupted by a virus program, according to an embodiment of the present invention;

Figure 5 is a flow chart of the method of removing a virus according to an embodiment of the present invention;

Figure 6 is a flow chart of a devastating behavior operation that can be performed by a virus program;

Figure 7 is a schematic diagram showing the structure of a system function call table;

Figure 8 is a schematic diagram of actual storage regions for system function call routines;

Figure 9 is a schematic diagram showing the structure the system function call table of figure 7 having stored respective control programs;

Figure 10 is a schematic diagram showing actual storage regions for the function call programs in the storage example as shown in figure 9;

Figure 11 is schematic diagram showing the structure of an independent operation call table for the control programs.

### Detailed Description of the Embodiments

A core concept of the present invention is: establishing corresponding reverse behavior operation steps according to obtained devastating behavior operation steps that can be performed by virus programs, and executing the reverse behavior operation steps, thereby implementing reverse operations with respect to the virus programs' operations, so as to separate the virus programs and recover data corrupted by the viruses.

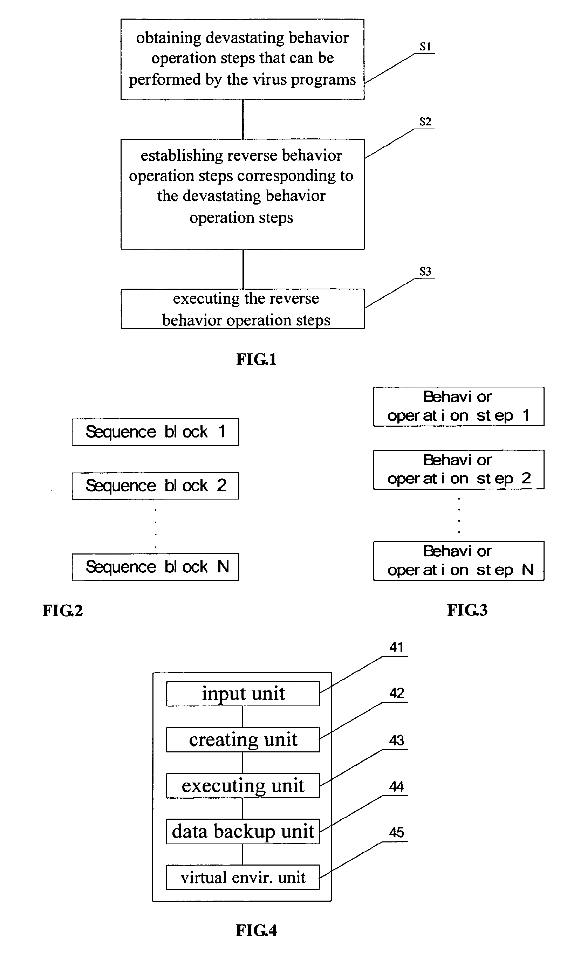

Referring to figure 1, there is a flow chart showing a method of recovering data corrupted by virus programs according to an embodiment of the present invention, which includes the following steps.

Step s1, obtaining devastating behavior operation steps that can be performed by the virus programs.

Like any computer program, a virus program includes a sequence of source codes that is able to perform specific operations. The set of a plurality of such source codes may be treated as a source code sequence block for performing a specific function or producing a specific result. For example, the typical virus program as shown in figure 2 has N source code sequence blocks with specific functions or results, i.e., sequence block 1, sequence block 2,......, sequence block N. The sequence blocks may be used to perform specific data corrupting operations, for example, moving data, deleting data or the like; They may also be used to perform an operation of parasitizing the program they belong to in the hosting program, for example, embedding the program into the hosting program by modifying an entry pointer of the hosting program (such an embedding method will not be described in detail because it is conventional), or changing the hosting program as an accessorial one to the program. Therefore, by obtaining the operation results and operations of each of the sequence blocks through analysis, it is possible to obtain operation steps that can be performed by the virus program. For example, figure 3 shows operation steps corresponding to the source code sequence blocks of the virus program as shown in figure 2, where sequence block 1 in figure 2 corresponds to operation step 1 in figure 3, sequence block 2 in figure 2 corresponds to operation step 2 in figure 3, ......, sequence block N in figure 2 corresponds to operation step N in figure 3.

The operation steps of the virus program, i.e. source code sequence blocks for performing specific functions or producing specific results, may be derived by an analysis. General steps for analyzing virus programs may be divided into dynamic and static.

The dynamic analysis refers to a specific work process of dynamically tracing a virus program by using a program debug tool such as DEBUG in condition that the memory has been infected and observing the virus program, so as to further understand the operation principle of the virus program on the basis of the static analysis. If the virus program is coded in a simple manner, the dynamic analysis is not necessary. However, if the virus program employs many technical means, only the analyzing method combining the dynamic and static analysis is able to complete the entire analysis process. For example, since the F_lip virus program employs random encryption, it can be decrypted only by dynamically analyzing the decrypting program of the virus program, so as to perform a further static analysis. The static analysis refers to printing the virus program codes into a disassembled program list by using a disassembler such as DEBUG and perform analysis, so as to see what modules the virus program is divided into, what system calls are used, what skills are applied, how to map the process of infecting a file through the virus program into a process of removing the virus program and repairing the data corrupted by the virus, what code may be used as a character code and how to defend such a virus program, and the like.

In the prior art, after the above analysis, the main job is to obtain the character code of the virus program and save it in a virus program character code library. In the present invention, it is necessary to obtain operation steps of the virus program, i.e., source code sequence blocks for performing specific functions or producing specific results, so as to guide recovery of data corrupted by the virus program. The operation steps of the virus program, i.e., the source code sequence blocks for performing specific functions or producing specific results, may be automatically obtained through a computer program. This implementation method will be described in detail in the following.

Step s2, establishing reverse behavior operation steps corresponding to the devastating behavior operation steps.

Because the operation steps that can be performed by the virus program have been obtained at step s1, it is possible to establish reverse behavior operation steps corresponding to the operation steps according to the operation steps; for example, reverse behavior operation steps 1, 2, ... N corresponding to operation steps 1, 2, ... N may be established. Assuming that operation step 1 in figure 3 is used to transfer stored data, corresponding reverse behavior operation step 1 is used for a corresponding reverse operation, i.e., recovering the data; If operation step 2 in figure 3 is used for deleting data, corresponding reverse behavior operation step 2 is used for performing a corresponding reverse operation to recover the deleted data (for example, to recover the data through redundancy checking). The establishment generates a corresponding reverse behavior operation step, i.e., generating a set of program source code instructions, and the operation step corresponding to the instruction set is opposite to the operation executed by the operation step. It is possible to obtain corresponding reverse behavior operation steps from the operation steps through a correspondence table, i.e., prepare in advance a data table where respective columns list various operation steps and corresponding reverse behavior operation steps; when the virus program perform an operation step, a corresponding reverse behavior operation step such as adding and deleting is obtained by comparison from the prepared data table; in this way, it is possible to complete conversion from all the operation steps of the virus program to the reverse behavior operation steps.

Step s3, executing the reverse behavior operation steps.

Because a reverse behavior operation step is a set of program source code instructions for a reverse operation, the execution of the reverse behavior operation step is actually a process of respectively invoking the program source code instructions in turn. Respective execution operations are performed according to each program source code instruction, thereby completing the recovery operation of data corrupted by the virus program. For example, a main function for performing the function of a reverse behavior operation step is established. In this main function, what is actually provided is a process of respectively invoking the program source code instructions in turn. Usually, the reverse behavior operation steps may be performed in the order of the operation steps that can be performed by the virus program.

The reverse behavior operation steps, i.e., the sets of program source code instructions, may be stored in a database or a large data storage table. For example, the reverse behavior operation steps are stored in a database table, and the reverse behavior operation steps of a virus program form storage elements (subset) in the database. The database may use the following data structure to store the storage elements, i.e., the reverse behavior operation steps of the virus program:
(virus program name), (reverse behavior operation step 1, reverse behavior operation step 2, ... reverse behavior operation step N), (additional information segment, deleting virus program body);

where 1, 2... N represent the order of steps of removing the virus program, the reverse behavior operation step includes source code sequence blocks, and the source code sequence blocks are used to complete reverse operations corresponding to the virus program's operation steps. The above reverse behavior operation step information may also include relevant operation parameters and the like. The above data structure may also formed in other manners such as:
(virus program name), (reverse behavior operation step 1, reverse behavior operation step 2, ... reverse behavior operation step N, additional information segment), (deleting virus program body);

In fact, the storage manner and the stored data structure may be determined by programmers. It is possible to employ any feasible storage manner and data structure, as long as it is able to store and invoke the reverse behavior operation steps.

The above steps s1, s2 and s3 may recover data corrupted by the virus program in most cases, but they are not the most sophisticated. When a virus program deletes or overwrites original data, because there is no information on the original data in the source code sequence block corresponding to the virus program's operation, the reverse behavior operation step thus established includes no information on the original data, and the reverse behavior operation step cannot retrieve the original data to overwrite for purpose of recovering data corrupted by the virus program. Therefore, the method of recovering data corrupted by a virus program according to the present invention may also include making a backup of information relevant to the computer operating system, and performing the reverse behavior operation steps by using the backup data from the backup step. For example, take back the backup data to overwrite the corrupted data, so as to recover the data corrupted by the virus program. The backup data may be stored in an information backup library to facilitate retrieving the backup data.

The information relevant to the computer operating system is usually program files susceptive to the computer virus program and sensitive files of the operating system. For example, registry, system configuration file and the like are data susceptive to infection. If a virus program modifies or deletes some files of a computer, and the files have backups in an information backup library, it is possible to retrieve the backups of the files from the information backup library to overwrite. It is preferable to only select sensitive information of the operating system for backup to reduce the influence on the user's computer space, because the virus program is generally more likely to infect these information, and thus has more influence on the user's computer. Of course, if the user's computer permits, it is preferable to make backups of all the files on the user's computer or the files considered as important by the user. In this way, it is possible to not only clean the virus program completely, but also recover data files corrupted by the virus program as far as possible.

The backup of information relevant to the computer operating system may also be incremental. When it is the first time to use the method of recovering data corrupted by a virus program according to the present invention, it is possible to make an initial backup of sensitive portions of the operating system (for example: data susceptive to infection such as registry, system configuration file and the like), and store the backup data or information in the information backup library in term of their classes. Each time a legal program changes these sensitive portions, an incremental backup of the changed portions is made in real time, i.e., it is only necessary to make a backup of corresponding contents to be modified in the information. Of course, it is also possible to make a backup of all the files regularly if permitted by the user's computer.

Referring to the following embodiment, the method of recovering data corrupted by a virus program will be described in detail.

Assuming there is a virus program named as ABC, after analyzing the virus program manually or by computer, the operation steps of the virus program are obtained as follows: (1) overwriting the value of the entry HKEY_LOCAL_MACHINE\SOFTWARE\456 in the registry, (2) adding the file position of the file abc.exe into a corresponding initiating entry in the registry, (3) automatically releasing a Trojan horse file named as 123.exe from the virus program.

Therefore, the following reverse behavior operation steps are established according to the above operation steps of the virus program ABC:
(ABC), (Retrieving the value corresponding to the entry HKEY_LOCAL_MACHINE\SOFTWARE\456 from "information backup library" to overwrite the entry HKEY_LOCAL_MACHINE\SOFTWARE\456 and deleting the initiating entry established by the virus program from the registry), (Deleting the file 123.exe and deleting the ABC virus program body)

In the above storage element, the virus program is named as ABC;
removing method 1: retrieving the value corresponding to the entry hkey_local_machine\software\456 from "information backup library " to overwrite the entry hkey_local_machine\software\456.
removing method 2: deleting the initiating entry established by the virus program from the registry.
additional information segment: deleting the file 123.exe and deleting the abc virus program body

The above information structure is a storage manner for the reverse behavior operation steps set by a person. Of course, it is also possible to perform storage by using other structures such as:
(ABC), (Retrieving the value corresponding to the entry HKEY_LOCAL_MACHINE\SOFTWARE\456 from " information backup library " to overwrite the entry HKEY_LOCAL_MACHINE\SOFTWARE\456, deleting the initiating entry established by the virus program from the registry, and deleting the file 123.exe), (Deleting the ABC virus program body)

The above stored information may also include relevant operation parameters for the reverse behavior operation steps.

Of course, during the actual running of a computer, it is impossible to describe the human's logic language to the computer in the above form. The process of implementing the above example on the computer is actually to convert the human's logic language into functional functions and instructions. That is to say, the reverse behavior operation steps are actually a series of function sequences (termed as " function sequence " in the following) in this specific embodiment. For example:
(ABC), (F(*P(X(456))), G(*Q(Y(K)))), (DEL(*PATH(123.exe)), DEL(*PATH(ABC)))

The above expressions are explained in the following:
ABC is the virus program body's name.
F() represents a functional function for overwriting a value into a registry entry.
*P() represents a pointer function pointing to backup data regarding the registry in " information backup library ".
X() represents a path function of HKEY_LOCAL_MACHINE\SOFTWARE\456 entry " in the registry.
G() represents a functional function for deleting an entry in the registry.
*Q() represents a pointer function pointing to within the registry.
Y() represents a path function of the initiating entry established by the virus program in the registry.
Variable K represents the initiating entry established by the virus program in the registry.
DEL() represents a functional function for deleting a file.
*PATH() represents a pointer function pointing to a file path.

It can be seen from the above embodiment that the process of performing the reverse behavior operation steps on the computer is a process of executing a series of function sequences respectively in turn. In the process implemented on the computer: The executing of reverse behavior operation steps may be establishing of a main function for performing functions of the reverse behavior operation steps. The main function invokes a " function sequence " respectively in turn, thereby achieving the function for executing reverse behavior operation steps and recovering data corrupted by the virus program. For example:

```
     Main function()
     {
     ...
      Function 1() ;
      Function2();
     ...
      FunctionN();
     ...
     ...
     }
```

Referring to figure 4, there is a schematic diagram showing the structure of an apparatus for recovering data corrupted by a virus program, according to an embodiment of the present invention. The apparatus for recovering data corrupted by a virus program includes an input unit 41, a creating unit 42 and an executing unit 43.

The input unit 41 is adapted for obtaining devastating behavior operation steps that can be performed by the virus program. The devastating behavior operation steps that can be performed by the virus program may be obtained through a previous analysis, and may be stored in a database in the user's computer system. The input unit 41 in the apparatus for recovering data corrupted by the virus program may obtain the devastating behavior operation steps that can be performed by the virus program by directly referring to the database.

The devastating behavior operation steps that can be performed by the virus program may be obtained through previous analysis, and may be stored in a database in a common server. The input unit 41 in the apparatus for recovering data corrupted by the virus program may obtain the devastating behavior operation steps that can be performed by the virus program by connecting to the database through a network.

Of course, it is also possible to regularly or irregularly connect the database for storing the devastating behavior operation steps in a local user's computer system to a common server through a network for upgrading, in order to perfect the local database. The process of obtaining the devastating behavior operation steps that can be performed by the virus program through an analysis has been described in detail in the above description on the method of recovering of the present invention, and therefore will not described repeatedly.

The creating unit 42 is adapted for establishing reverse behavior operation steps corresponding to the devastating behavior operation steps.

The reverse behavior operation steps corresponding to the devastating behavior operation steps are established according to the devastating behavior operation steps; For example, reverse devastating behavior operation steps 1, 2, ... N corresponding to devastating behavior operation steps 1, 2, ... N may be established. Assuming that devastating behavior operation step 1 is used to transfer stored data, corresponding reverse behavior operation step 1 is used for a corresponding reverse operation for recovering the data; if devastating behavior operation step 2 is used for deleting data, corresponding reverse behavior operation step 2 is used for performing a corresponding reverse operation to recover the deleted data (for example, to recover the data through redundancy checking). The establishment generates a corresponding reverse behavior operation step, i.e., generating a set of program source code instructions, and the operation step corresponding to the instruction set is opposite to the operation executed by the operation step.

The executing unit is adapted for performing the reverse behavior operation steps.

Because the reverse behavior operation step is a set of program source code instructions, the execution of the reverse behavior operation step is actually a process of respectively invoking the program source code instructions in turn. Respective execution operations are performed according to each program source code instruction, thereby completing the recovery operation of data corrupted by the virus program. For example, a main function for performing the function of a reverse behavior operation step is established. In this main function, what is actually executed is a process of respectively invoking the program source code instructions in turn.

The apparatus for recovering data corrupted by a virus program may also include a data backup unit 44 for making a backup of information relating to the computer operating system. The executing unit 43 performs the reverse behavior operation steps by using the backup information. The backup data may be stored in an information backup library to facilitate the reference to the backup data.

The input unit 41 the creating unit 42 and the executing unit 43 may complete the job for recovering data corrupted by the virus program in most cases, but they are not the most sophisticated. When a virus program deletes or overwrites original data, because there is no information on the original data in the source code sequence block corresponding to the virus program's devastating behavior operation, the reverse behavior operation step thus established includes no information on the original data, and the reverse behavior operation step cannot retrieve the original data to overwrite for purpose of recovering data corrupted by the virus program. Therefore the apparatus for recovering data corrupted by a virus program according to the present invention may also include a data backup unit 44 for making a backup of information relevant to the computer operating system in advance.

The information relevant to the computer operating system is usually program files susceptive to the computer virus program, sensitive files of the operating system and the like. For example: Registry, system configuration file and the like are data susceptive to infection. If a virus program modifies or deletes some files of a computer, and the files have their backup in an information backup library, it is possible to retrieve the backup of the files from the information backup library to overwrite. It is preferable to only select sensitive information of the operating system for backup to reduce the influence on the user's computer storage space, because the virus program is generally more likely to infect these information, and thus has more influence on the user's computer. Of course, if the user's computer permits, it is preferable to make backups of all the files on the user's computer or the files considered as important by the user. In this way, it is possible to not only clean the virus program completely, but also recover data files corrupted by the virus program as far as possible.

The data backup unit 44 may first make an initial backup of sensitive portions of the operating system (for example: data susceptive to infection such as registry, system configuration file and the like), and store the backup data or information in the information backup library in term of their classes. Each time a legal program changes these sensitive portions, an incremental backup of the changed portions is made in real time, i.e., it is only necessary to make a backup of corresponding contents to be modified in the information. Of course, it is also possible to make a backup of all the files regularly if permitted by the user's computer.

As shown in the figure, the apparatus for recovering data corrupted by a virus program may also include a virtual environmental unit 45. The virtual environmental unit 45 is adapted for embedding control programs obtained by programming according to the devastating operation behaviors into the operating system. When the control programs are invoked by devastating operation instructions in the program to be checked, the control programs record the devastating operation behaviors by the program to be checked, and returns successful response information for leading the program to be checked to keep on running in a virtual environmental, thereby checking and recording a series of executable devastating behavior operations and steps of the virus program.

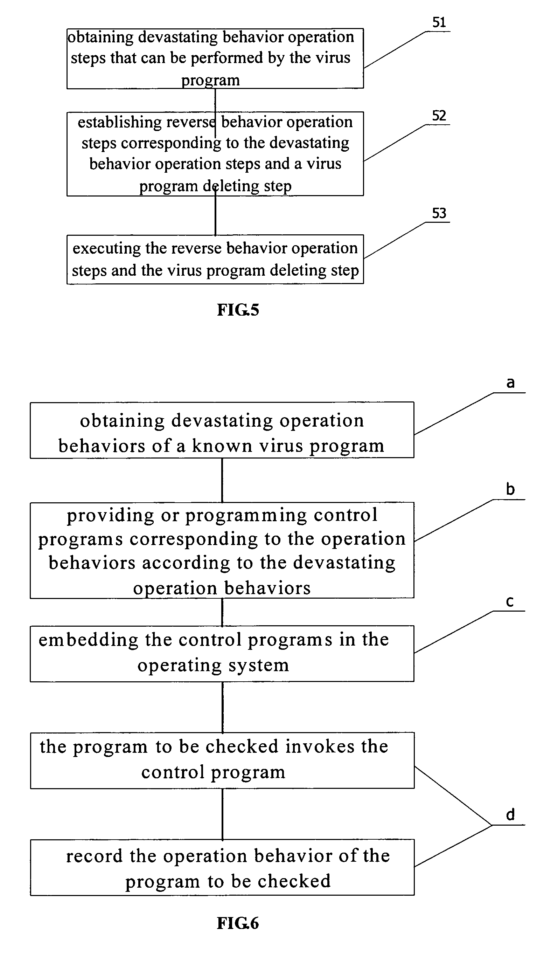

Referring to figure 5, there is a flow chart for the method of removing a virus program according to an embodiment of the present invention, where the method includes the following steps:

Step 51, obtaining devastating behavior operation steps that can be performed by the virus program. A devastating behavior operation step refers to a code sequence block for performing a specific function or producing a specific result;

Step 52, establishing reverse behavior operation steps corresponding to the devastating behavior operation steps and a virus program deleting step;

Step 53, executing the reverse behavior operation steps and the virus program deleting step.

The method of removing a virus program has the same principle with the method of recovering data corrupted by a virus program according to the present embodiment, but has a main difference: upon recovering the data corrupted by the virus program, the virus program is deleted too. Therefore, the description on the method of recovering data corrupted by a virus program in the present application may be referenced for the description on the method of removing a virus program.

The devastating behavior operation steps that can be performed by the virus program, i.e., the source code sequence blocks for performing specific functions or producing specific results, may be obtained previously through an analysis, or may be automatically obtained through a computer program. Referring to figure 6, the method of obtaining operation steps that can be performed by the virus program through a computer may include the following steps.

Step a, obtaining devastating operation behaviors of a known virus program. Virus programs have some behaviors common to the virus programs and quite special. Devastating operation behaviors of the known virus program may be obtained manually or through a computer. The devastating operation behaviors generally include those operations on the computer system, abnormal or tending to cause bad results. For example: abnormal read/ write operation, deleting a system file, causing memory confliction, corrupting a hard disk partition table and so on. The followings are some specific operation behaviors that may be monitored as operation behaviors of a virus program: occupying INT13H, modifying the total amount of memory in DOS system data region, writing operation to COM or EXE files, switching characteristic between a virus program and its hosting program, and the like. Besides the above apparent devastating operation behaviors, generally, the virus programs also have normal operation behaviors. For the behaviors that may generate, individually or in combination, dangerous operations of corrupting data, they also fall into the scope of devastating operation behaviors of a virus program according to the present invention.

Besides the above apparent devastating operation behaviors, generally, the virus programs also have normal operation behaviors. If these operation behaviors may generate, individually or in combination, dangerous operations of corrupting data, they also fall into the scope of devastating operation behaviors of a virus program according to the present invention.

Generally, a corrupting behavior of a virus program may consist of a series of instructions or instruction sets for performing devastating operations and necessary parameters, each of the instructions or instruction sets generates at least an independent devastating operation behavior. Therefore, the devastating operation behaviors of the existing virus programs may be obtained, i.e., the instructions or instruction sets and necessary parameters involved by independent devastating operation behaviors, which are included in the existing virus programs may be extracted out. For example, assuming 03H or 05H function call for 13H interrupt involves a possible dangerous operation of corrupting data, the instructions corresponding to 03H or 05H function call for 13H interrupt may be considered as instructions for generating an independent devastating operation behavior. For example, assuming 02H function call for 10H interrupt and 06H function call for 11 H interrupt in combination involve a possible dangerous operation of corrupting data, the instruction sets corresponding to 02H function call for 10H interrupt and 06H function call for 11 H interrupt may be considered as an instruction set for generating an independent devastating behavior operation. If a program under check has such instruction code, it is known that the program has a suspicious operation behavior that may corrupt other programs or data. By collecting these behavior operations, it is possible to judge whether a program is a virus program and how to recover data corrupted by a respective virus program to the maximal extent based on the behavior set of the program.

The devastating operation behaviors of known virus programs may also be obtained with the assistant of a computer. For example, it is possible to obtain devastating operation behaviors of known and unknown virus programs through the method of checking viruses by activating the infected object as described in Chinese patent application No. 01117726.8, entitled " method, system and medium for checking and removing known unknown computer viruses ". Because the application no. 01117726.8 have been disclosed, it will not be described herein.

Step b, providing or programming control programs corresponding to the operation behaviors according to the devastating operation behaviors.

To this end, after the devastating operation behaviors of the existing virus program are extracted, it is possible to provide control programs corresponding to the devastating behavior operations according to the devastating operation behaviors. The control programs are in response to the instructions and parameters involved by devastating operation behaviors of the program to be checked, and return information showing that the devastating behavior operations are successful, to lead the program to be checked to the next behavior, with the devastating operation behaviors of the program to be checked being recorded at the same time.

Assuming the instructions and parameters involved in devastating operation behaviors of a program are: DEL(Parameter1; Parameter2; Parameter3), where DEL represents deleting, parameter 1 represents a deleted disk number, parameter 2 represents a deleted cluster number, parameter 3 represents a variable indicating whether the deleting is successful or not, and the control programs corresponding to the devastating operation behaviors may be:
(1) WRITE(FILE1, "DEL(Parameter1; Parameter2; Parameter3)");
(2) WRITE(DEL(Parameter1; Parameter2; Parameter3), 0, 0, 0);

where the instruction in the first line represents recording a devastating instruction " DEL (parameter 1; parameter 2; parameter 3) " as a character string in file FILE 1; the instruction in the second line represents returning a flag " 0 " indicating the successful operation of the devastating instruction DEL (parameter 1; parameter 2; parameter 3).

Step c, embedding the control programs in the operating system, transferring control of the devastating operation behaviors to the control programs, wherein the control may be obtained by making the control programs to obtain a system control preceding over that of the operating system.

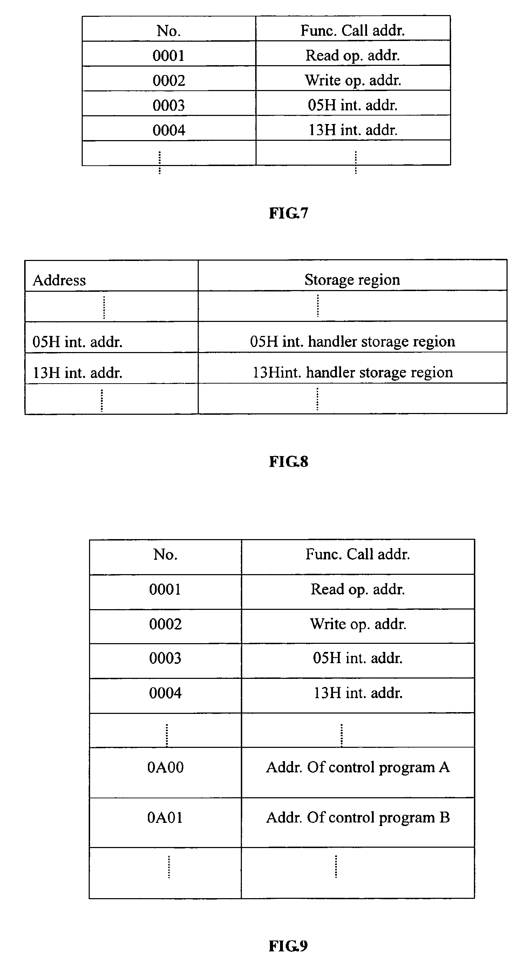

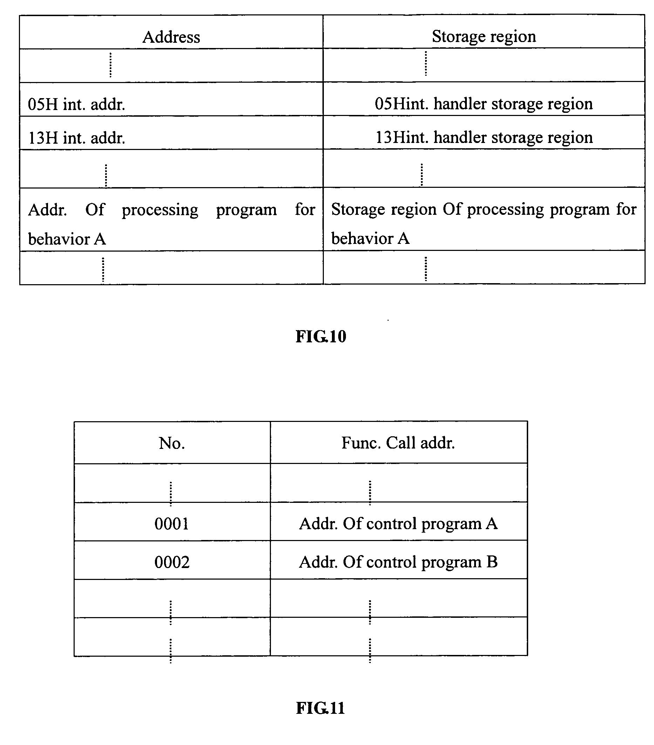

In order to be able to check and record, automatically and fast, the devastating operation behaviors possibly present in the program so as to judge if the program is a virus program, it is necessary for the control programs to obtain control of the devastating operation behaviors present in the program under checking, so as to obtain the devastating operation behaviors present in the program under checking. To this end, the control programs are enabled to obtain control of respective devastating operation behaviors by embedding the control programs into the operating system. Of course, it is also possible to make the control programs to obtain control of the system through other manners, thereby detecting and recording the devastating operation behaviors of the program to be checked. If embedding the control programs in the operating system, it can be achieved by embedding the control programs into a function call table of the operating system. It is also possible to store the control programs in an independent operation behavior call table, so that it has a priority higher than the function call table of the operating system. For example: There may be a system function call table in any operating system, and the system function call table may have a different structure as required. Referring to figure 7, the system function call table as shown in figure 7 includes two fields. One is a serial number field for storing serial numbers of system function call routines; another is a function call address field for storing a system function call routine pointer, i.e., an address generally corresponding to the first address of a system function call routine. Figure 8 is a schematic diagram of actual storage regions for system function call routines. When a function provided by an operating system, for example, the write magnetic disk operation provided by 13H interrupt processing program, is needed, it is necessary to extract the address of 13H interrupt processing program from the system function call table as shown in figure 7, and read a respective program from the storage region at the extracted address as shown in figure 8 into the memory for executing, so as to obtain the operation result. If embedding the control programs in the operating system, one of the methods is to store respective control programs in the system function call table. Assuming 100H (H: representing a hex number) devastating operation behaviors are parsed and 100H corresponding control programs have been programmed, the storage addresses of these 100H control programs are saved in the table as shown in figure 7. The storage result is shown in figure 9. Figure 10 is a schematic diagram showing actual storage regions for the function call programs in the storage example as shown in figure 9. The storage addresses of the control programs are stored in succession to the addresses of the system function call routines in turn.

In fact, the method of embedding the control programs into the operating system is not limited to the storage manner as shown in figure 9. It is also possible to employ the manner of directly storing the control programs as an independent operation behavior call table as shown in figure 11, and making the control programs to obtain a priority over the system function call routine. This can be achieved through the following: modifying the system function call pointer in figure 7, i.e., the address of a system function call routine in the function call address field, as the address of a corresponding control program.

Taking figure 9 as an example, and assuming the address of control program A numbered as 0A00 corresponds to 05H interrupt numbered as 0003, it is necessary to modify " 05H interrupt address " stored in a " function call address " field as " address of control program A ", so that when the program corresponding to " 05H interrupt address " is invoked by instructions involved in the devastating operation behavior, the " address of control program A " is actually invoked, and " control program A " obtains the system control preceding over " 05H interrupt ". Keeping on extending this concept, it is possible to embed the control program in the operating system.

In another embodiment, the system function call routine corresponding to a devastating operation behavior may transfer its control to a corresponding control program, so that the control program can obtain control of the devastating operation behavior. Taking the storage manner in figure 11 as an example, all the control programs form another system function call table in the system. As long as the table has a priority higher than the original system function call table of the system, it is possible for the control program to obtain control of the devastating operation behaviors. For example, when the program to be checked invokes a control program to invoke a system function call routine, the control program in the table of figure 11 is first invoked. If the invoked control program does not exist in the table of figure 11, the actual system function call routine in the table of figure 2 is then invoked.

Because the control program has obtained the control of the devastating operation behavior through step c, when the program to be checked invokes the control program at step d, it is possible to record the operation behavior of the program to be checked by the control program. That is to say, when the program to be checked executes, once the instructions existing therein for achieving the devastating operation behavior is executed, i.e., invoking a corresponding system function call routine, a corresponding control program is first invoked to respond to the invoking and record the devastating operation behavior of the program to be checked.

In general, a virus program needs to obtain the operation results of devastating behaviors, and continues their subsequent operations when successful operation results are obtained. Therefore, for a further judgment on the program to be checked, it is also possible to return successful response information to the invoking from the program to be checked by the control programs, thereby leading the program to be checked to keep on the next behavior. In fact, because the control of the operating system has been taken over by the control programs at step c, the program to be checked does not obtain the result of actual running. Its received information is that returned from the control programs, and its obtained information is fake relative to its demand. Therefore, the program to be checked does not actually run in the environment of operating system, but virtually run in the environment under control by the control programs, so that it is possible to detect and record a series of behavior operations of the program to be checked, without damaging the system. The above method of obtaining devastating behavior operations that can be performed by the virus program may be understood as: modeling a running environment in a real operating system through a software-implemented method. The data and running result of this environment is exactly isolated from that of the real operating system, but the executing procedure and result of a file or process are exactly identical to those running in the real operating system.

In fact, step c is an optional step. Whether the control programs are embedded in the operating system, it is possible to form a virtual running environment for leading the behaviors of the program to be checked in order to detect operation behaviors of the program to be checked, as long as the control programs have control preceding over the operating system when instructions involved in a program operation behavior are running.

Reverse behavior operation steps corresponding to the operation steps may be established by obtaining automatically through a computer or deriving through a previous analysis the behavior operations that can be performed by the virus program according to the above method. Further, respective execution operations are performed according to the operation steps that can be performed by the virus program, thereby completing the recovery operations of data corrupted by the virus program according to the present invention.

The method and apparatus for recovering data corrupted by virus program and a method of removing a virus program according to the present invention have been specifically described in the above. Specific examples are used to explain the principle and embodiments of the present invention in the present disclosure. The above description of the embodiments is only for ease of understanding the method of the present invention and its core concept. Various changes in the embodiments and application scopes will be occurred to those skilled in the art by referring to the concept of the present invention. In sum, the content of the description should not be construed as limitation on the present invention.

## Claims

1. A method of recovering data corrupted by a virus program, comprising:
obtaining a devastating behavior operation step that can be performed by the virus program;
establishing a reverse behavior operation step corresponding to the devastating behavior operation step;
performing the corresponding reverse behavior operation step in response to the devastating behavior operation step that can be performed by the virus program.

2. The method of recovering data corrupted by a virus program according to claim 1, further comprising:
making a backup of information relating to a computer operating system,
performing the reverse behavior operation step by using the backup data.

3. The method of recovering data corrupted by a virus program according to claim 2, wherein the backup may be incremental.

4. The method of recovering data corrupted by a virus program according to claim 1 or 2, wherein the devastating behavior that can be performed by the virus program is determined by the following steps of:
obtaining the devastating operation behavior of a known virus program;
writing a corresponding control program according to the devastating operation behavior;
making the control program acquire control of the devastating operation behavior;
invoking the corresponding control program by the virus program so that the control program records the devastating operation behavior by the virus program.

5. The method of recovering data corrupted by a virus program according to claim 4, further comprising:
returning a successful response message from the control program to the program to be checked.

6. The method of recovering data corrupted by a virus program according to claim 4, wherein a system function call routine for embedding the control program in the operating system or corresponding to the devastating operation behavior transfers control to a corresponding control program, so that the control program can acquire control of the devastating operation behavior.

7. The method of recovering data corrupted by a virus program according to claim 6, wherein the reverse behavior operation step is performed in the order of the devastating behavior operation step that can be performed by the virus program.

8. The method of recovering data corrupted by a virus program according to claim 1 or 2, wherein the corresponding reverse behavior operation step established in response to the devastating behavior operation step is stored in a database table.

9. An apparatus for recovering data corrupted by a virus program, comprising:
an input unit for obtaining a devastating behavior operation step that can be performed by the virus program;
a creating unit for establishing a reverse behavior operation step corresponding to the devastating behavior operation step;
an executing unit for executing the reverse behavior operation step.

10. The apparatus for recovering data corrupted by a virus program according to claim 9, further comprising:
a data backup unit for making a backup of information relating to a computer operating system, wherein the executing unit performs the reverse behavior operation step by using the backup information.

11. The apparatus for recovering data corrupted by a virus program according to claim 9, further comprising:
a virtual environmental unit for embedding the control program obtained in response to the devastating operation behavior into the operating system, so that the control program acquires control of the devastating operation behavior;
wherein upon invoking the corresponding control program by the virus program, the control program records the operation by the virus program.

12. A method of removing a virus program, comprising:
obtaining a devastating behavior operation step that can be performed by the virus program;
establishing a reverse behavior operation step corresponding to the devastating behavior operation step and a virus program deleting step;
executing the reverse behavior operation steps and the virus program deleting step.
